# EUROPEAN PATENT SPECIFICATION

(11) **EP 3 133 416 B1**
(45) Date of publication and mention of the grant of the patent: **28.06.2023**
(21) Application number: 16184530.0
(22) Date of filing: 17.08.2016
(51) Int. Cl.: G01S 7/40, G01R 29/10, H01Q 1/12

(54) **SYSTEM AND METHOD FOR MEASURING A RADAR CROSS SECTION OF AN OBJECT**
SYSTEM UND VERFAHREN ZUR MESSUNG EINES RADARQUERSCHNITTS EINES OBJEKTS
SYSTÈME ET PROCÉDÉ DE MESURE D'UNE SURFACE ÉQUIVALENTE RADAR D'UN OBJET

(30) Priority: 20.08.2015 EP 15002469
(43) Date of publication of application: 22.02.2017
(73) Proprietor: BAE SYSTEMS plc, London SW1Y 5AD (GB)
(72) Inventor: WHITE, Gregor, Warton Preston, Lancashire PR4 1AX (GB); SCHOESSOW, Eric, Philip, deceased (GB)
(74) Representative: BAE SYSTEMS plc Group IP Department

(56) References cited:
- PHILIPPE POULIGUEN ET AL: "RCS computation in near field", DAYS ON DIFFRACTION, PROCEEDINGS OF THE INTERNATIONAL CONFERENCE. 2006, IEEE, PI, 1 January 2006 (2006-01-01), pages 252-265, XP031078074, ISBN: 978-5-9651-0226-6
- Buglerbilly: , 25 June 2012 (2012-06-25), XP055245640, Retrieved from the Internet: URL:http://cmsimg.defensenews.com/apps/pbc si.dll/bilde?Site=M5&Date=20120624&Categor y=DEFREG01&ArtNo=306240001&Ref=AR&MaxW=640 &Border=0&European-UAV-Alliance-Widens [retrieved on 2016-01-28]
- GIUSEPPE NESTI ET AL: "Recent advances at the European Microwave Signature Laboratory", PROCEEDINGS OF SPIE, S P I E - INTERNATIONAL SOCIETY FOR OPTICAL ENGINEERING, US, vol. 2313, 26 September 1994 (1994-09-26), pages 56-67, XP007910246, ISSN: 0277-786X, DOI: 10.1117/12.197336 ISBN: 978-1-62841-730-2
- J. RICHARD HUYGENS: "COMPLETE RADAR CROSS-SECTION MEASUREMENTS", RADAR REFLECTIVITY MEASUREMENTS SYMPOSIUM, 1 April 1964 (1964-04-01), XP055246387,
- Tom Mahood: "Blue Fire", , 13 April 2012 (2012-04-13), XP055245342, Retrieved from the Internet: URL:http://www.stealthskater.com/Documents /Mahood_02.pdf [retrieved on 2016-01-27]
- H. C. MARLOW ET AL: "The RAT SCAT cross-section facility", PROCEEDINGS OF THE IEEE., vol. 58, no. 8, 1 August 1965 (1965-08-01) , pages 946-954, XP055246394, US ISSN: 0018-9219, DOI: 10.1109/PROC.1965.4073

## Description

### FIELD OF THE INVENTION

The present invention relates to systems and methods for measuring radar cross sections of objects.

### BACKGROUND

Aircraft radar cross section tends to be an important parameter in the field of military aircraft design.

It is generally desirable for a military aircraft to have a minimal radar cross section. This makes the military aircraft less observable to various types of radars.

Conventionally, the radar cross section of an aircraft is measured or predicted by placing the aircraft, or test model representative of the aircraft, in an anechoic chamber or outdoor test range, illuminating the aircraft/model with a radar signal, and measuring the radar return from the aircraft model.

The aircraft or model is generally supported in the anechoic chamber or outdoor test range by one or more upwardly extending supports or "pylons", for example, an ogive pylon. To get an accurate measurement or prediction of the radar cross section of the aircraft or model, the supports should have a substantially lower radar cross section than the test aircraft or model.

Philippe Pouliguen et al.: "RCS computation in near field", Days on Diffraction 2006, 1 January 2006, pages 252-265, ISBN: 978-5-9651-0226-6 and Giuseppe Nesti et al.: "Recent advances at the European Microwave Signature Laboratory", Proceedings of SPIE, vol. 2313, 26 September 1994, pages 56-67, ISBN: 978-1-62841-730-2 relate to techniques for calculating radar cross section of an object.

### SUMMARY OF THE INVENTION

In a first aspect, the present invention provides a system for measuring a radar cross section of an object, according to claim 1. In a further aspect, the present invention provides a method of measuring a radar cross section of an object, according to claim 13. Optional features are set out in the dependent claims.

### BRIEF DESCRIPTION OF THE DRAWINGS

Figure 1 is a schematic illustration (not to scale) of showing a system in which a radar cross section of an aircraft is measured, according to an embodiment of the invention;
Figure 2 is a schematic illustration (not to scale) showing a perspective view of an aircraft mounting structure, not falling within the scope of the invention;
Figure 3 is a schematic illustration (not to scale) showing a plan view of the aircraft mounting structure, not falling within the scope of the invention;
Figure 4 is a schematic illustration (not to scale) showing further details of a portion of the aircraft mounting structure;
Figure 5 is a schematic illustration (not to scale) showing a side view of a radar cross section measurement apparatus, according to an embodiment of the invention;
Figure 6 is a schematic illustration (not to scale) showing a plan view of the measurement apparatus, according to an embodiment of the invention; and
Figure 7 is a process flow chart showing certain steps of an embodiment of a process of measuring a radar cross section of the aircraft, according to an embodiment of the invention.

### DETAILED DESCRIPTION

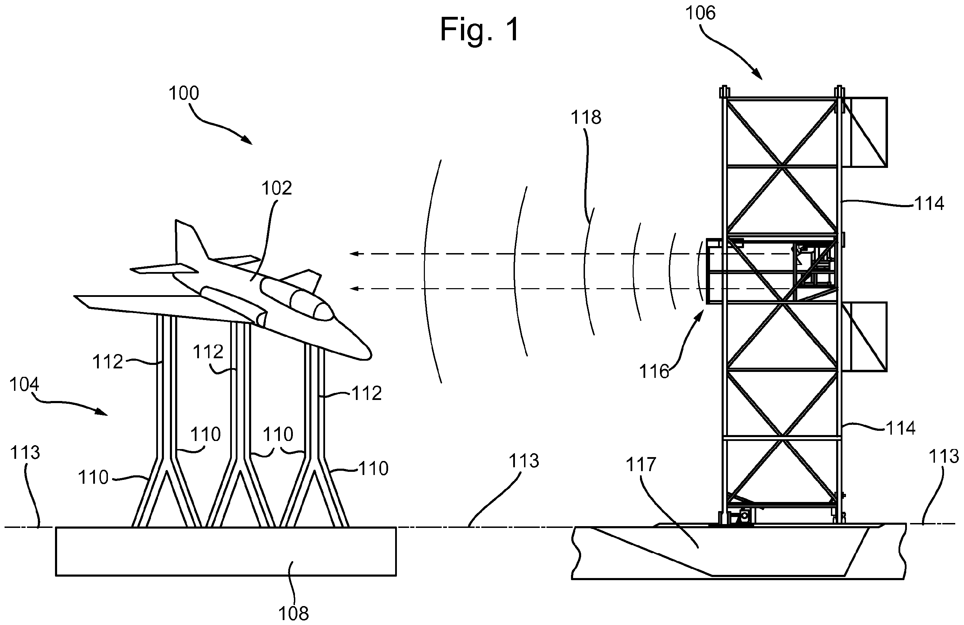

Figure 1 is a schematic illustration (not to scale) of showing a system 100 in which a radar cross section of an aircraft 102 is measured.

In this embodiment, the system 100 comprises an aircraft mounting structure 104 on which the aircraft 102 is mounted, and a radar cross section measurement apparatus 106.

The aircraft mounting structure 104 comprises a turntable 108, three shrouds 110, and three supporting members 112.

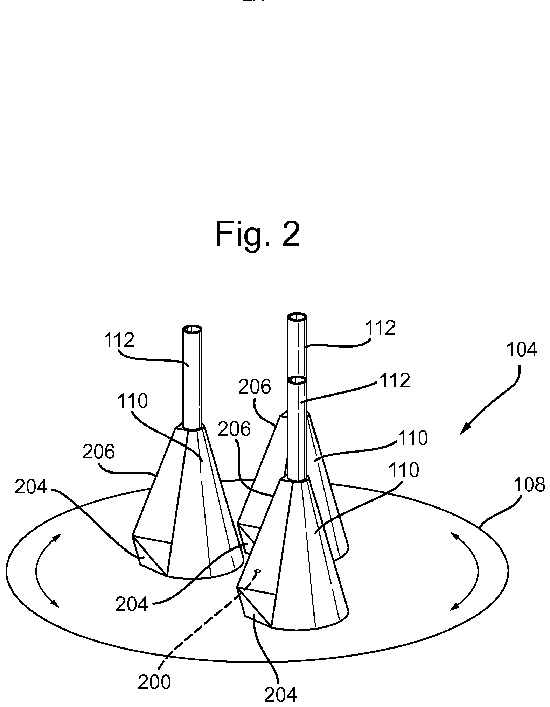

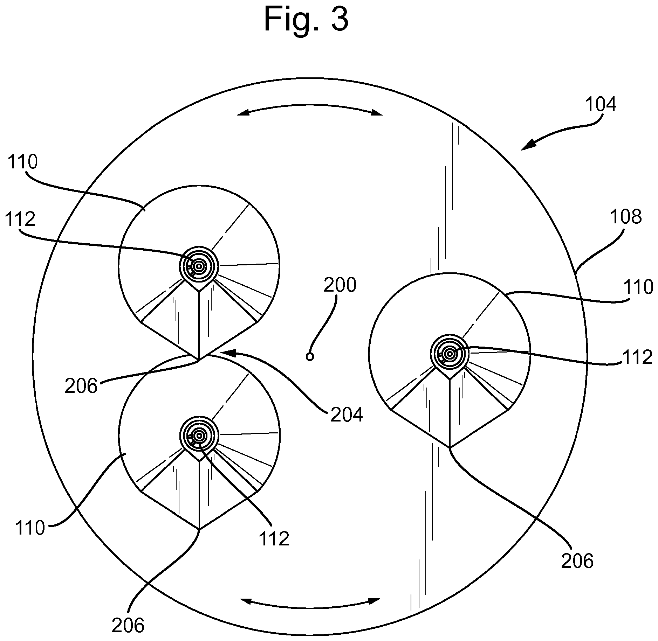

The aircraft mounting structure 104 and its operation will be described in more detail later below with reference to Figures 2 and 3.

In this embodiment, the turntable 108 is cylindrical in shape. Figure 1 shows a side view of the aircraft mounting structure 104, and thus the turntable 108 appears rectangular. The turntable 108 is recessed or sunk into the ground 113 such that an upper surface of the turntable 108 is substantially parallel with the surface of the ground 113.

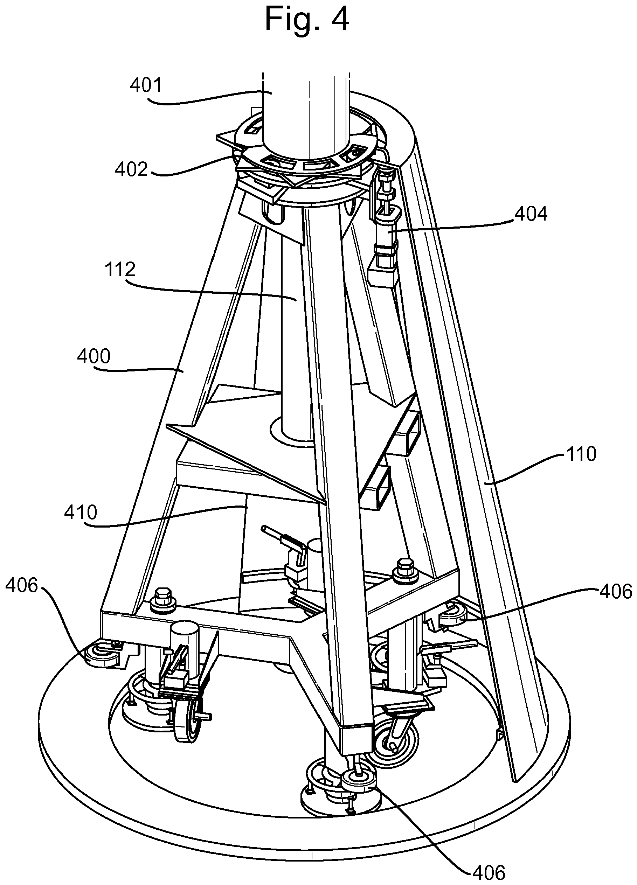

In this embodiment, each of the shrouds 110 is a cover or housing for a respective supporting member 112. External surfaces of the shrouds 110 may be covered in a radar absorbent material (RAM). Further details of the shrouds 110 and the supporting members 112 housed therein are provided later below with reference to Figure 4.

The supporting members 112 are substantially perpendicular to the upper surface of the turntable 108. A first end of each of the supporting members 112 is attached to the upper surface of the turntable 108. A second end of each of the supporting members 112 (a second end of a supporting member 112 being an opposite end to the first end of the supporting member 112) is attached to a respective hardpoint of the aircraft 102.

Thus, the aircraft 102 is held above the turntable 108, by the supporting members 112 (which are housed in respective shrouds 110), in a fixed position relative to the turntable 108. In operation, as described in more detail later below, the turntable 108 rotates about its axis, thereby causing rotation of the aircraft 102 relative to the measurement apparatus 106.

In this embodiment, the external surfaces of the shrouds 110 are coated with a radar absorbent material (RAM). Also, at least the upper surface of the turntable 108 is coated with a RAM.

In this embodiment, electrical wires and/or hydraulic lines may run within the shrouds 110. Thus, the aircraft 102 may be supplied with power, data, etc. during measurement of its radar cross section.

The measurement apparatus 106 is spatially separated from the aircraft mounting structure 104 and the aircraft 102 by a predetermined distance, for example 19m.

The measurement apparatus 106 comprises a frame 114 and a radar cross section measurement module 116.

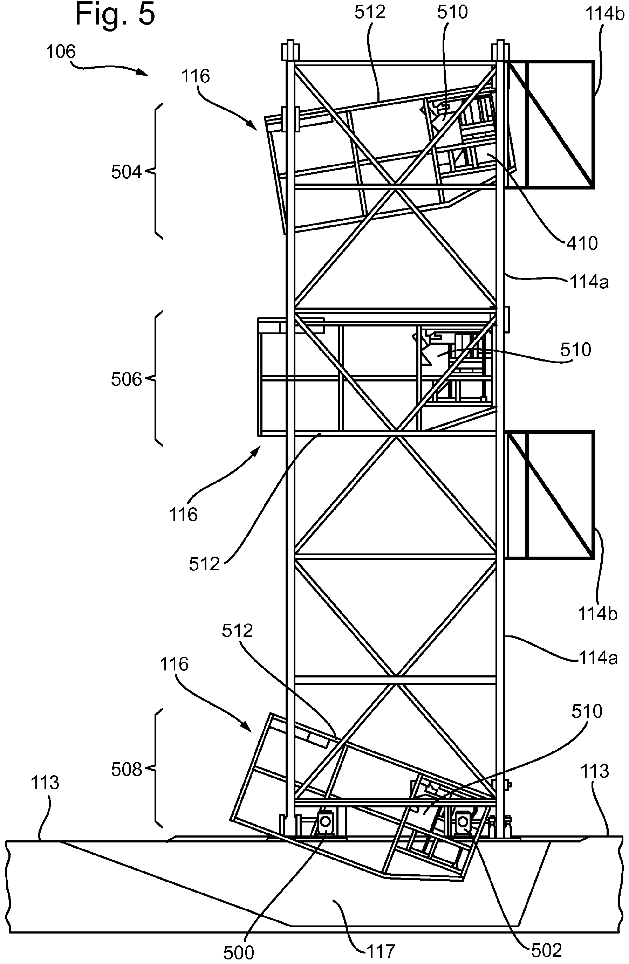

The measurement apparatus 106 and its operation will be described in more detail later below with reference to Figures 5 to 7.

The measurement apparatus 106 comprises a frame 114 and a radar cross section measurement module 116.

The frame 114 is fixed at a first end to the ground 113, and extends substantially vertically from the ground 113. In this embodiment, the height of a second end of the frame 114 (the second end of the frame 114 being a distal end of the frame 114 opposite to the first end of the frame 114) above the ground 113 is approximately 12m.

In this embodiment, the frame 114 is fixed to the ground either side of a cavity 117 recessed into the ground 113.

As described in more detail later below with reference to Figure 5, the measurement module 116 is slidably mounted to the frame 114, and may be moved along the length of the frame 114. Thus, the height of the measurement module 116 above the ground 113 may be altered. Furthermore, the measurement module 116 may be moved along the frame 114 to be at or proximate to the first end of the frame 114 such that measurement module 116 is at least partially within the cavity 117.

In this embodiment, in operation, as described in more detail later below with reference to Figures 5 to 7, the measurement module 116 emits radio waves 118, from the measurement apparatus 106, in the direction of the aircraft mounting structure 104 and the aircraft 102, as indicated in Figure 1 by dotted arrows. The radio waves 118 incident on the aircraft mounting structure 104 and the aircraft 102 may be reflected by the aircraft mounting structure 104 and/or the aircraft 102 back towards the measurement module 116. The measurement module 116 is further configured to detect radio waves 118 that have been reflected by the aircraft mounting structure 104 and/or the aircraft 102 towards the measurement module 116.

Figure 2 is a schematic illustration (not to scale) showing a perspective view of the aircraft mounting structure 104.

Figure 3 is a schematic illustration (not to scale) showing a plan view of the aircraft mounting structure 104.

In this embodiment, the turntable 108 is configured to be rotated about its axis by one or more motors (not shown in the Figures). Thus, the upper surface of the turntable 108 rotates about its centre point 200 as indicates in Figures 2 and 3 by double-headed solid arrows.

Rotation of the turntable is controlled by a computer (not shown in the Figures).

In this embodiment, the shape of the external surface of each shroud 110 is substantially that of a conical frustum having a tear-drop shaped base with a cut-out portion 204. The cut-out portion 204 is located at the tapered portion of the largest base of the conical frustum.

In other words, the shape of the lower portion of each shroud 110 is substantially that of a portion of a cone having a tear-shaped base that lies between two parallel planes cutting that cone, and includes a cut-out portion 204 located at the tip (i.e. point or vertex) of the (tear-drop shaped) largest base of the conical frustum. The upper portion of each shroud 110 is a cylindrical sleeve covering the upper portion of a respective supporting member 112. This upper portion is covered by a RAM component. This RAM component is cylindrical in shape and has a tear-shaped cross-section. This RAM component aligned with the shroud lower portion.

In this embodiment, each shroud 110 comprises a "front edge" 206 that extends from the tip (i.e. point or vertex) of the tear-drop shaped smallest base of the conical frustum shape of that shroud 110 to the cut-out portion 204 of that shroud 110.

In this embodiment, for each shroud 110, the largest of the bases of its conical frustum shape is proximate to the turntable 108.

In this embodiment, as the turntable 108 rotates (for example, in a clockwise direction) about its axis, each of the shrouds 110 counter rotates (for example, in an anti-clockwise direction) about its respective axis relative to the turntable 108. In this embodiment, the counter rotation of the shrouds 110 is at the same rotational speed as the rotation of the turntable 108 This matching of the rotational speed of the turntable 108 and the rotational speeds of the shrouds 110 advantageously tends to provide that, as the turntable 108 rotates about its axis, the shrouds 110 maintain the same orientation with respect to entities remote from the turntable 108, for example the measurement apparatus 106.

Counter-rotation of the shrouds 110 is controlled by the computer.

In this embodiment, the shrouds 110 are positioned on the turntable 108 such that the front edges 206 of the shrouds 110 face the measurement apparatus 106. For example, a point on the front edge 206 of each shrouds 110 may be the closest point on that shroud 110 to the measurement apparatus 106. Preferably, when viewed from above as in Figure 2, for each shroud 110, a line that passes from the axis of that shroud assembly 110 through the front edge 206 of that shroud 110 points towards the measurement apparatus 106. More preferably, when viewed from above as in Figure 2, for each shroud 110, a line that passes from the axis of that shroud assembly 110 and bisects the angle between the sides of that shroud 110 at the front edge 206 of that shroud 110 points towards the measurement apparatus 106.

Thus, in this embodiment, the rotational speed of the turntable 108 and the counter rotational speeds of the shrouds 110 advantageously tends to provide that, as the turntable 108 rotates about its axis, the front edges 206 of the shrouds 110 face the measurement apparatus 106.

Advantageously, the cut-out portions 204 tends to allow the shrouds 110 to move past each other as the turntable 108 rotates and the shrouds 110 counter-rotate.

Figure 4 is a schematic illustration (not to scale) showing apparatus housed within a shroud 110. In Figure 4, the shroud 110 housing the apparatus has been partially removed.

In this embodiment, the apparatus within the shroud 110 comprises a tripod 400, a cylindrical member 401, a ring gear 402, and a motor 404, a plurality of horizontal rollers 406.

The tripod 400 is the base portion of a supporting member 112. A base of the tripod 400 is fixedly attached to the turntable 108 such that the position and orientation of the tripod 400 relative to the turntable 108 is fixed.

The tripod 400 is further fixedly attached to a cylindrical member 410 such that the position and orientation of the tripod 400 relative to the cylindrical member 401 is fixed. The cylindrical member 401 is the upper portion of a supporting member 112. The cylindrical member 401 passes through the apex of the tripod 400 (i.e. the end of the tripod 400 that is opposite to the base of the tripod 400). The tripod 400 advantageously tends to maintain the stability of the cylindrical member 401 and the aircraft 102 mounted thereon as the turntable 108 rotates about its axis.

The ring gear 402 is located at the apex of the tripod 400. The ring gear 402 fits around the cylindrical member 401, i.e. the cylindrical member 401 passes through the ring gear 402. The ring gear 402 is coaxial with the cylindrical member 401.

In this embodiment, the motor 404 is coupled to the ring gear 402 and is configured to rotate the ring gear 402 about the axis of the ring gear 402 (i.e. about the axis of the cylindrical member 401). The motor 404 is coupled to a drive system of the turntable 108 and is configured to, as the turntable 108 is rotated about the axis of the turntable 108, counter rotate the ring gear 402 about the axis of the ring gear 402. The ring gear 402 is counter rotated at the same rotational speed as the turntable 108, albeit in the opposite direction.

In this embodiment, the shroud 110 is fixedly attached to the ring gear 402 such that the position and orientation of the shroud 110 relative to the ring gear 402 is fixed.

Thus, in operation, the motor 404 rotates the shroud 110 (by rotating the ring gear 402) about the axis of the cylindrical member 401. Thus, the shroud 110 is rotated around the tripod 400. This rotation of the shroud 110 around the tripod 400 is facilitated by the horizontal rollers 406 that are mounted to the tripod 400 at or proximate to the base of the tripod 400.

Figure 5 is a schematic illustration (not to scale) showing a side view of the measurement apparatus 106.

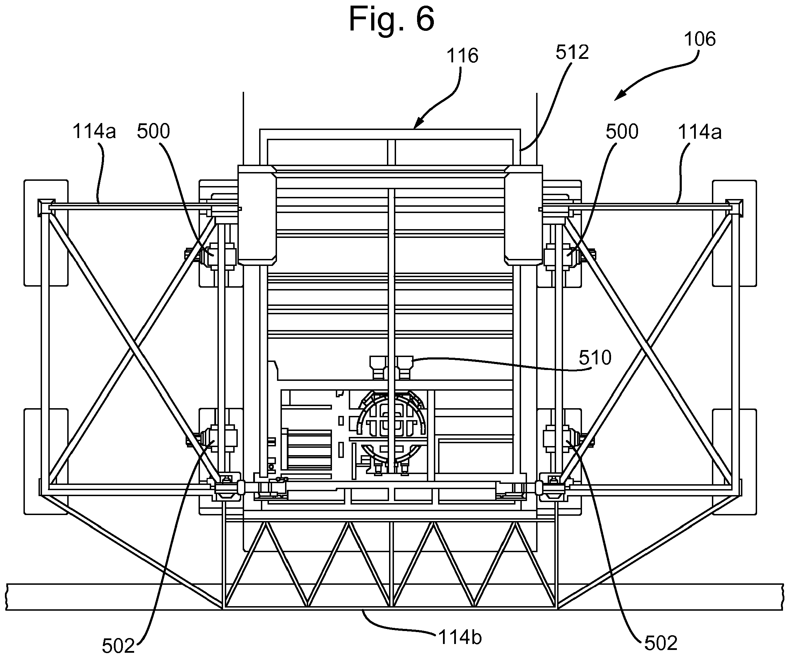

Figure 6 is a schematic illustration (not to scale) showing a plan view of the measurement apparatus 106.

The frame 114 comprises a plurality of steel beams that are attached together by, for example, welding or bolts. The frame 114 is advantageously resistant to deflection, for example, as a result of wind.

In this embodiment, the frame 114 comprises two vertical spaced apart towers 114a. The two towers 114a are coupled together via two rear braces 114b. The towers 114a are positioned either side of the cavity 117. The height of each tower 114a above the ground 113 is approximately 12m.

A proximal end of each tower 114 is coupled to the ground 113 via mounting brackets including, for each tower 114, a first mounting bracket 500 and a second mounting bracket 502.

In this embodiment, the measurement module 116 is mounted between the two towers 114a such that the measurement module 116 may be slid between different positions along the lengths of the two towers 114a. Also, in this embodiment, the measurement module 116 is mounted between the two towers 114a such that the orientation of the measurement module 116 with respect to the towers 114a may be changed.

In this embodiment, movement of the measurement module 116 with respect to the frame 114 is driven by motors located at the first mounting brackets 500 and the second mounting brackets 502. In particular, motors located at the first mounting brackets 500 control the angle or orientation of the measurement module 116 with respect to the frame 114. The angle or orientation of the measurement module 116 is controlled by the differential rotation of motors located at the mounting brackets 500, 502. Also, motors located at the second mounting brackets 502 control the position of the measurement module 116 along the lengths of the towers 114a, i.e. the height of the measurement module 116 above the ground 113. The height of the measurement module 116 is controlled by the common mode rotation of motors located at the mounting brackets 500, 502.

Positional and angular information of the measurement module 116 may be relayed, via the first and second mounting brackets 500, 502, to the computer. The computer may include a controller for controlling the position and orientation of the measurement module with respect to the frame 114.

Three different example positions and orientations of the measurement module 116 with respect to the frame 114 are shown in Figure 5. At a first position and orientation, indicated in Figure 5 by the reference numeral 504, the measurement module 116 is located proximate to the top of the frame 114 (i.e. near to the distal ends of the towers 114a) and is inclined downwards such that the measurement module 116 is directed towards the aircraft 102. At a second position and orientation, indicated in Figure 5 by the reference numeral 506, the measurement module 116 is located substantially equidistant between the top and the bottom of the frame 114 (i.e. half-way along the lengths of the towers 114a) and is substantially horizontal such that the measurement module 116 is directed towards the aircraft 102. At a third position and orientation, indicated in Figure 5 by the reference numeral 508, the measurement module 116 is located proximate to the bottom of the frame 114 (i.e. near to the proximal ends of the towers 114a) and is inclined upwards such that the measurement module 116 is directed towards the aircraft 102. In the third example position and orientation, the measurement module 116 is at least partially located within the cavity 117. Advantageously, the cavity 117 allows for tilting of the measurement module 116 when the measurement module 116 is located proximate to the bottom of the frame 114.

In this embodiment, the measurement module 116 comprises four radar antennas (which are herein after collectively referred to as the "antennas" and are collectively indicated in the Figures by the reference numeral 510), and a housing 512.

The antennas 510 are located within the housing 510, proximate to a rear end of the housing 512. The antennas 510 are directed towards an opening located at a front end of the housing 512, the front end of the housing 512 being opposite to the rear end of the housing 512.

In operation, the antennas 510 transmit radio waves 118 from the rear end of the housing 512, to the front end of the housing 512, out of the opening of the housing 512, and onto the aircraft 102. In operation, the antennas 510 receive radio waves reflected by the aircraft 102, and send electrical signals corresponding to the received radio waves to the computer.

In some embodiments, the antennas 510 are mounted to a rotatable turntable operable to select of applicable antennas for measurement. In some embodiments, this turntable allows for the direction of the radio waves transmitted by the antennas 510 with respect to the housing 512 to be changed.

In some embodiments, one or more further modules may be mounted within or onto the housing 512 in addition to the antennas 510. Example further modules include, but are not limited to, power supply units, Radio Frequency (RF) convertors, and transceivers. Preferably, one or more of the further modules are mounted to a rack that may be removed from the housing 512, for example, by sliding the rack from the rear of the measurement modules 116 so as to allow access to the antennas 510.

In this embodiment, the housing 512 is substantially rectangular cuboidal in shape. A length of the housing 512 from the front end of the housing 512 to the rear end of the housing 512 is 3.54m. A distance between the front end of the housing 512 and a transmitting face of the antennas 510 is 2.50m. A height of the housing 512 from and upper surface of the housing 512 to a lower surface of the housing 512 is 1.60m. A width of the housing 512 is 2.80m.

The walls of the housing 512 define the housing opening at the front end of the housing 512. The walls of the housing 512 advantageously tend to reduce or eliminate the antenna 510 receiving radar returns from entities other than the aircraft 102. This advantageously tends to increase the accuracy with which the radar cross section of the aircraft 102 is determined. The walls of the housing 512 advantageously form an aperture which directs emitted radio waves in only a desired direction. The walls may be coated in RAM to enhance this effect and prevent internal reflections from corrupting the measurements.

In this embodiments, the walls of the housing 512 are made from other materials instead of or in addition to CFC. For example, the walls may be made of aluminium panels that are approximately 3mm thick. In some embodiments, the housing 512 comprises one or more strengthening members or beams to reinforce the housing 512, for example, against wind loadings.

Apparatus, including the computer, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

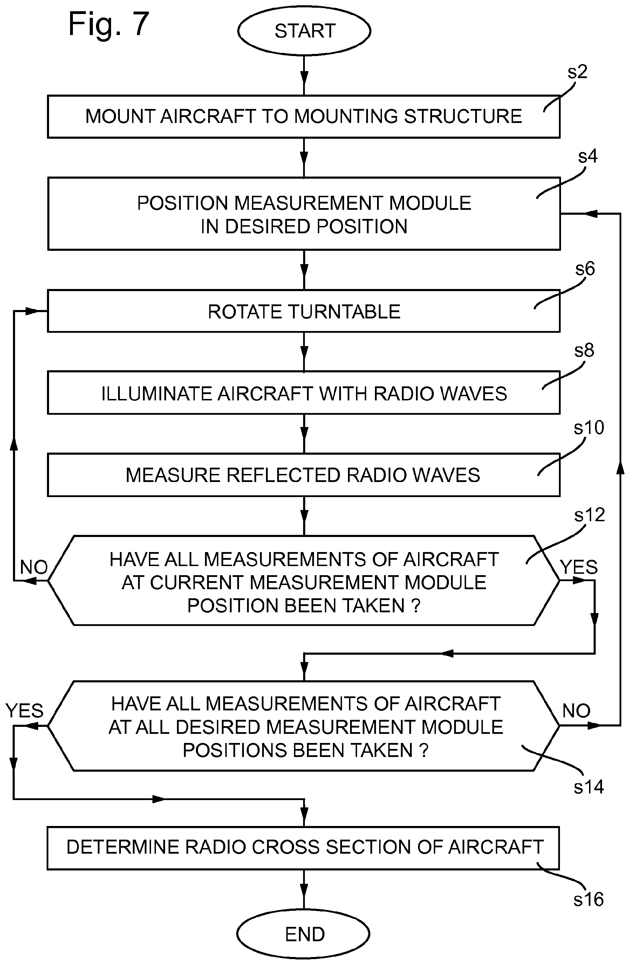

It should be noted that certain of the process steps depicted in the flowchart of Figure 7 and described below may be omitted or such process steps may be performed in differing order to that presented above and shown in Figure 7. Furthermore, although all the process steps have, for convenience and ease of understanding, been depicted as discrete temporally-sequential steps, nevertheless some of the process steps may in fact be performed simultaneously or at least overlapping to some extent temporally.

Figure 7 is a process flow chart showing certain steps of an embodiment of a process of measuring a radar cross section of the aircraft 102.

At step s2, the aircraft 102 is mounted to the aircraft mounting structure 104 as described in more detail earlier above with reference to Figure 1.

At step s4, the measurement module 116 is positioned and oriented on the frame 114 in a desired position. For example, in a first iteration of step s4 the measurement module 116 is located in the first position and orientation 504. Positioning and orienting the measurement module 116 on the frame may be performed by the computer controlling the motors of the first and second mounting brackets 500, 502.

At step s6, the turntable 108 is rotated so as to position the aircraft 102 at a desired orientation with respect to the measurement module 116.

As the turntable 108 is rotated, the motors 404 housed in the shrouds 110 counter rotate the shrouds 110 about the axes of the cylindrical portions 112. Thus, the facings of the external skins 410 relative to the measurement apparatus 106 are maintained, i.e. the front edges 206 of the shrouds 410 remain directed towards the measurement apparatus 106 throughout rotation of the turntable 108.

At step s8, the computer controls the measurement module 116 such that the antennas 510 transmit radio waves 118 onto the aircraft 102 and the aircraft mounting structure 104.

At step s10, the antennas 510 receive radio waves reflected by the aircraft 102 and the aircraft mounting structure 104. An electrical signal corresponding to the reflected electromagnetic radiation received by the antennas 510 is sent to the computer.

In this embodiment, the aircraft mounting structure 104, i.e. the turntable 108, the shrouds 110, and the cylindrical portions 112, are coated in RAM. Thus, at least some of the energy of the radio waves incident on the aircraft mounting structure 104 tends to be absorbed by the aircraft mounting structure 104. This tends to provide that the radar cross section of the aircraft mounting structure 104 tends to be reduced.

Furthermore, the orientations of the shrouds 110 relative to the measurement module 116 advantageously tend to provide that the radar cross sections of the shrouds 110 are minimised. In particular, the counter rotation of the shrouds 110 relative to the turntable 108 provides that the front edges 206 of the shrouds 110 remain facing the measurement module 116. Thus, the surface area of the shrouds 110 orthogonal to the incident radio waves 118 tends to be minimised. Thus, radar return from the shrouds 110 tends to be minimised.

Thus, advantageously, the radar cross section of the aircraft 102, as measured by the measurement module 116, tends to be relatively large compared to the radar cross section of the aircraft mounting structure 104. This tends to increase the accuracy with which the radar cross section of the aircraft 102 is determined.

In some embodiments, some or all of steps s6 to s10 are performed simultaneously or overlapping at least to some extent. For example, in some embodiments, the turntable 108 rotates as the measurement module 116 illuminates the aircraft 102 with radio waves 118.

At step s12, the computer determines whether or not all measurements of the aircraft 102 with the measurement module 116 in its current position and orientation on the frame 114 have been taken.

If at step s12, it is determined that not all measurements of the aircraft 102 with the measurement module 116 in its current position and orientation on the frame 114 have been taken, the method of Figure 7 proceeds back to step s6. On returning to step s4, the turntable 108 rotates to locate the aircraft 102 in a new orientation relative to the measurement module 116. Further measurements of the radar cross section of the aircraft 102 are then taken with the measurement module 116 in its current position and orientation on the frame 114.

Preferably, steps s6 to s12 are iterated so as to capture a 360° radar cross section of the aircraft 102 at each position and orientation of the measurement module 116 on the frame 114.

However, if at step s12, it is determined that all measurements of the aircraft 102 with the measurement module 116 in its current position and orientation on the frame 114 have been taken, the method of Figure 7 proceeds to step s14.

At step s14, the computer determines whether or not all measurements of the aircraft 102, for all desired positions and orientations of the measurement module 116 on the frame 114, have been taken.

If at step s14, it is determined that not all measurements of the aircraft 102, for all desired positions and orientations of the measurement module 116 on the frame 114, have been taken, the method of Figure 7 proceeds back to step s4. On returning to step s4, the measurement module 116 is positioned and oriented on the frame 114 in a new desired position. For example, in a second iteration of step s4, the measurement module 116 may be located in the second position and orientation 506. Also, in a third iteration of step s4, the measurement module 116 may be located in the third position and orientation 508.

Preferably, steps s4 to s14 are iterated so as to capture a radar cross section of the aircraft 102 for multiple angles of attack. More preferably, steps s4 to s14 are iterated so as to capture a full spherical radar cross section of the aircraft 102.

However, if at step s14, it is determined that all measurements of the aircraft 102, for all desired positions and orientations of the measurement module 116 on the frame 114, have been taken, the method of Figure 7 proceeds to step s16.

At step s16, the computer processes the electronic signals corresponding to the received radar reflections received by the antennas 510 to determine a radar cross section of the aircraft 102.

In this embodiment, the aircraft 102 and the aircraft support structure 104 are located in a near-field region of the antennas 510. Measuring the radar cross section of the aircraft 102 in the near-field region of the antennas 510 advantageously tends to provide that size of the measurement facility for determining aircraft radar cross sections is reduced. The computer may implement a "near-field to far-field" transformation to predict far-field characteristics of the aircraft 102 from the captured near-field measurements.

Thus, a process of measuring a radar cross section of an aircraft 102 is provided.

Advantageously, the above described method and apparatus may be used to determine a relatively accurate measurement of the radar cross section of the aircraft. The above method and apparatus is particularly useful with low observable (LO) aircraft as the radar cross section of the support structure tends to be much lower than that of the aircraft. It tends to be difficult to accurately measure the radar cross sections of LO aircraft using conventional techniques.

In the above embodiments, the aircraft mounting structure comprises three aircraft mounts for supporting the aircraft above the turntable. The aircraft mounts comprise a cylindrical portion and a shroud. However, in other embodiments, the aircraft mounting structure comprises a different number of aircraft mounts. In some embodiments, one or more of the aircraft mounts has a different structure. For example, in some embodiments, a shroud covers the entirety of a cylindrical portion. Also, in some embodiments, one or more of the cylindrical portions is replaced by a member having a shaped other than a cylinder.

In the above embodiments, the shrouds are shaped as described above, for example, the shrouds have a tear-drop shaped cross section. However, in other embodiments one or more of the shrouds has a different shape. Preferably, the cross section of a shroud has a pointed portion that. For example, a shroud may have a diamond or triangular cross section. Preferably, in use, the point portion of the cross section of the shroud is pointed towards the antennas.

In the above embodiments, the apparatus housed within the shrouds is as described above. However, in other embodiments, one or more of the shrouds houses different apparatus that is configured to counter-rotate the shroud such that the orientation of that shroud relative the antennas is maintained.

In the above embodiments, the measurement module comprises four antennas. However, in other embodiments, the measurement module comprises a different number of antennas.

In the above embodiments, the housing of the measurement module is substantially cuboidal in shaped. However, in other embodiments, the housing of the measurement module is a different shape.

## Claims

1. A system for measuring a radar cross section of an object (102), the system comprising:
a frame (114) having a first end and a second end, the frame (114) being attached to a ground plane (113) at or proximate to the first end, the frame (114) extending upwardly from the ground plane (113) to the second end;
a measurement module (116) coupled to the frame (114) and comprising one or more radar antennas (510), wherein:
the measurement module (116) is moveable along the frame (114) between the first end and the second end,
**characterised in**
the measurement module (116) being configured to rotate about an axis such that the orientation of the measurement module (116) with respect to the frame (114) may be changed; and
a cavity (117) recessed in the ground plane (113) and located at or proximate to the first end of the frame (114), such that the measurement module (116) is at least partially within the cavity (117) when at the first end of the frame (114).

2. The system according to claim 1, wherein the axis is substantially parallel to the ground plane (113).

3. The system according to claim 1 or 2, wherein:
the measurement module (116) further comprises a housing (512);
the housing (512) comprises one or more housing walls that define an opening; and
the one or more antennas (510) are located in the housing (512) and are configured to transmit and/or receive radio waves (118) passing through the opening.

4. The system according to claim 3, wherein the one or more antennas (510) are coupled to the housing (512) via a rotation device operable to rotate the antennas (510) relative to the housing (512) about a further axis.

5. The system according to claim 4, wherein the further axis is substantially parallel to the ground plane (113), and the further axis is substantially perpendicular to the axis.

6. The system according to any of claims 3 to 5, wherein the one or more housing walls comprise one or more materials selected from the group of materials consisting of carbon fibre composite, aluminium, and a radar absorbent material.

7. The system according to any of claims 1 to 6, wherein a distance between the first end and the second end is at least 10m.

8. The system according to any of claims 1 to 7, wherein
the system further comprises a mounting structure for supporting the object (102) above the ground plane (113) during a radar cross section measurement of the object (102);
the mounting structure is remote from the frame (114); and
the one or more antennas (510) are arranged to transmit radio waves (118) towards the mounting structure.

9. The system according to claim 8, wherein the mounting structure comprises:
a base (108) configured to rotate about a base axis;
an elongate support (112) extending upwardly from the base (108) to a tip, the tip being configured to receive the object (102); and
a shroud (110) housing at least a portion of the elongate support (112);
wherein
the shroud (110) is configured to rotate about a support axis, the support axis being substantially parallel to the base axis, the rotation of the shroud (110) about the support axis being in a direction that is opposite to the rotation of the base (108) about the base axis.

10. The system according to claim 9, wherein a rotational speed of the base (108) about the base axis is substantially equal to a rotational speed of shroud (110) about the support axis.

11. The system according to any of claims 8 to 10, wherein the mounting structure is located in a near field region of the one or more antennas (510).

12. The system according to any of claims 1 to 11, wherein:
the one or more antennas (510) are configured to receive radio waves (118) reflected by the object (102);
the system further comprises one or more processors coupled the one or more antennas (510); and
the one or more processors are configured to process signals corresponding to the radio waves (118) received by the one or more antennas (510) to predict far-filed characteristics of the object (102).

13. A method of measuring a radar cross section of an object (102), the method comprising:
providing a frame (114) having a first end and a second end, the frame (114) being attached to a ground plane (113) at or proximate to the first end, the frame (114) extending upwardly from the ground plane (113) to the second end, wherein a cavity is (117) recessed in the ground plane (113) and located at or proximate to the first end of the frame (114), such that a measurement module (116) is at least partially within the cavity (117) when at the first end of the frame (114);
providing a measurement module (116) coupled to the frame (114) and comprising one or more radar antennas (510), the measurement module (116) being moveable along the frame (114) between the first end and the second end, and the measurement module (116) being configured to rotate about an axis such that the orientation of the measurement module (116) with respect to the frame (114) may be changed;
locating the measurement module (116) at a first position and orientation with respect to the frame (114);
while the measurement module (116) is located at the first position and orientation with respect to the frame (114):
transmitting, by the one or more antennas (510), radio waves (118) onto the object (102); and
receiving, by the one or more antennas (510), radio waves (118) reflected by the object (102); and
determining, by one or more processors operatively coupled to the one or more antennas (510), the radio cross section of the object (102) using one or more signals corresponding to the radio waves (118) received by the one or more antennas (510).

14. The method according to claim 13, wherein:
the method further comprises:
locating the measurement module (116) at a second position and orientation with respect to the frame (114); and
while the measurement module (116) is located at the second position and orientation with respect to the frame (114):
transmitting, by the one or more antennas (510), radio waves (118) onto the object (102); and
receiving, by the one or more antennas (510), radio waves (118) reflected by the object (102); and
the step of determining the radio cross section of the object (102) comprises using one or more signals corresponding to the radio waves (118) received by the one or more antennas (510) while the measurement module (116) is located at the second position and orientation with respect to the frame (114).

## Patentansprüche

1. System zum Messen eines Radarquerschnitts eines Objekts (102), das System umfassend:
einen Rahmen (114), der ein erstes Ende und ein zweites Ende aufweist, wobei der Rahmen (114) an einer Massefläche (113) an oder nahe dem ersten Ende angebracht ist, wobei sich der Rahmen (114) von der Massefläche (113) zu dem zweiten Ende nach oben erstreckt;
ein Messmodul (116), das mit dem Rahmen (114) gekoppelt ist und umfassend eine oder mehrere Radarantennen (510), wobei:
das Messmodul (116) entlang des Rahmens (114) zwischen dem ersten Ende und dem zweiten Ende bewegbar ist,
**gekennzeichnet durch**
das Messmodul (116), das konfiguriert ist, um sich um eine Achse herum derart zu drehen, dass die Ausrichtung des Messmoduls (116) hinsichtlich des Rahmens (114) geändert werden kann; und
einen Hohlraum (117), der in der Massefläche (113) vertieft ist und an oder nahe dem ersten Ende des Rahmens (114) derart angeordnet ist, dass sich das Messmodul (116) mindestens teilweise innerhalb des Hohlraums (117) befindet, wenn es sich an dem ersten Ende des Rahmens (114) befindet.

2. System nach Anspruch 1, wobei die Achse im Wesentlichen parallel zu der Massefläche (113) ist.

3. System nach Anspruch 1 oder 2, wobei:
das Messmodul (116) ferner ein Gehäuse (512) umfasst;
das Gehäuse (512) eine oder mehrere Gehäusewände, die eine Öffnung definieren, umfasst; und
die eine oder die mehreren Antennen (510) in dem Gehäuse (512) angeordnet und konfiguriert sind, um Funkwellen (118), die durch die Öffnung hindurchgehen, zu übertragen und/oder zu empfangen.

4. System nach Anspruch 3, wobei die eine oder die mehreren Antennen (510) über eine Drehvorrichtung, die betriebsfähig ist, um die Antennen (510) bezüglich des Gehäuses (512) um eine weitere Achse herum zu drehen, mit dem Gehäuse (512) gekoppelt sind.

5. System nach Anspruch 4, wobei die weitere Achse im Wesentlichen parallel zu der Massefläche (113) ist und die weitere Achse im Wesentlichen senkrecht zu der Achse ist.

6. System nach einem der Ansprüche 3 bis 5, wobei die eine oder die mehreren Gehäusewände ein oder mehrere Materialien, die aus der Gruppe von Materialien ausgewählt sind, bestehend aus Kohlefaserverbundwerkstoff, Aluminium und einem radarabsorbierenden Material, umfassen.

7. System nach einem der Ansprüche 1 bis 6, wobei ein Abstand zwischen dem ersten Ende und dem zweiten Ende mindestens 10 m beträgt.

8. System nach einem der Ansprüche 1 bis 7, wobei
das System ferner eine Befestigungsstruktur zum Stützen des Objekts (102) oberhalb der Massefläche (113) während einer Radarquerschnittsmessung des Objekts (102) umfasst;
die Befestigungsstruktur entfernt von dem Rahmen (114) ist; und
die eine oder die mehreren Antennen (510) eingerichtet sind, um Funkwellen (118) zu der Befestigungsstruktur hin zu übertragen.

9. System nach Anspruch 8, wobei die Befestigungsstruktur umfasst:
eine Basis (108), die konfiguriert ist, um sich um eine Basisachse herum zu drehen;
eine längliche Stütze (112), die sich von der Basis (108) zu einer Spitze nach oben erstreckt, wobei die Spitze konfiguriert ist, um das Objekt (102) zu empfangen; und
eine Ummantelung (110), die mindestens einen Abschnitt der länglichen Stütze (112) unterbringt; wobei
die Ummantelung (110) konfiguriert ist, um sich um eine Stützachse herum zu drehen, wobei die Stützachse im Wesentlichen parallel zu der Basisachse ist, wobei die Drehung der Ummantelung (110) um die Stützachse herum in eine Richtung ist, die der Drehung der Basis (108) um die Basisachse herum entgegengesetzt ist.

10. System nach Anspruch 9, wobei eine Drehgeschwindigkeit der Basis (108) um die Basisachse herum im Wesentlichen gleich einer Drehgeschwindigkeit der Ummantelung (110) um die Stützachse herum ist.

11. System nach einem der Ansprüche 8 bis 10, wobei die Befestigungsstruktur in einem Nahfeldbereich der einen oder der mehreren Antennen (510) angeordnet ist.

12. System nach einem der Ansprüche 1 bis 11, wobei:
die eine oder die mehreren Antennen (510) konfiguriert sind, um Funkwellen (118), die mittels des Objekts (102) reflektiert werden, zu empfangen;
das System ferner einen oder mehrere Prozessoren umfasst, die mit der einen oder den mehreren Antennen (510) gekoppelt sind; und
der eine oder die mehreren Prozessoren konfiguriert sind, um Signale zu verarbeiten, die den Funkwellen (118), die mittels der einen oder den mehreren Antennen (510) empfangen werden, entsprechen, um Fernfeldeigenschaften des Objekts (102) vorherzusagen.

13. Verfahren zum Messen eines Radarquerschnitts eines Objekts (102), das Verfahren umfassend:
Bereitstellen eines Rahmens (114), der ein erstes Ende und ein zweites Ende aufweist, wobei der Rahmen (114) an einer Massefläche (113) an oder nahe dem ersten Ende angebracht ist, wobei sich der Rahmen (114) von der Massefläche (113) zu dem zweiten Ende nach oben erstreckt, wobei ein Hohlraum (117) in der Massefläche (113) vertieft ist und an oder nahe dem ersten Ende des Rahmens (114) derart angeordnet ist, dass sich ein Messmodul (116) mindestens teilweise innerhalb des Hohlraums (117) befindet, wenn es sich an dem ersten Ende des Rahmens (114) befindet;
Bereitstellen eines Messmoduls (116), das mit dem Rahmen (114) gekoppelt ist und umfassend eine oder mehrere Radarantennen (510), wobei das Messmodul (116) entlang des Rahmens (114) zwischen dem ersten Ende und dem zweiten Ende bewegbar ist und das Messmodul (116) konfiguriert ist, um sich um eine Achse herum derart zu drehen, dass die Ausrichtung des Messmoduls (116) hinsichtlich des Rahmens (114) geändert werden kann;
Anordnen des Messmoduls (116) in einer ersten Position und Ausrichtung hinsichtlich des Rahmens (114);
während das Messmodul (116) in der ersten Position und Ausrichtung hinsichtlich des Rahmens (114) angeordnet ist:
Übertragen, mittels der einen oder der mehreren Antennen (510), von Funkwellen (118) auf das Objekt (102); und
Empfangen, mittels der einen oder der mehreren Antennen (510), von Funkwellen (118), die mittels des Objekts (102) reflektiert werden; und
Bestimmen, mittels einem oder mehreren Prozessoren, die mit der einen oder den mehreren Antennen (510) wirkgekoppelt sind, des Funkquerschnitts des Objekts (102) unter Verwendung eines oder mehrerer Signale, die den Funkwellen (118), die mittels der einen oder den mehreren Antennen (510) empfangen werden, entsprechen.

14. Verfahren nach Anspruch 13, wobei:
das Verfahren ferner umfasst:
Anordnen des Messmoduls (116) in einer zweiten Position und Ausrichtung hinsichtlich des Rahmens (114); und
während das Messmodul (116) in der zweiten Position und Ausrichtung hinsichtlich des Rahmens (114) angeordnet ist:
Übertragen, mittels der einen oder der mehreren Antennen (510), von Funkwellen (118) auf das Objekt (102); und
Empfangen, mittels der einen oder der mehreren Antennen (510), von Funkwellen (118), die mittels des Objekts (102) reflektiert werden; und
der Schritt des Bestimmens des Funkquerschnitts des Objekts (102) ein Verwenden eines oder mehrerer Signale umfasst, die den Funkwellen (118), die mittels der einen oder den mehreren Antennen (510) empfangen werden, entsprechen, während das Messmodul (116) in der zweiten Position und Ausrichtung hinsichtlich des Rahmens (114) angeordnet ist.

## Revendications

1. Système destiné à mesurer une coupe transversale radar d'un objet (102), le système comprenant :
un cadre (114) ayant une première extrémité et une seconde extrémité, le cadre (114) étant fixé à un plan de masse (113) au niveau ou à proximité de la première extrémité, le cadre (114) s'étendant vers le haut à partir du plan de masse (113) jusqu'à la seconde extrémité ;
un module de mesure (116) accouplé au cadre (114) et comprenant une ou plusieurs antennes radar (510) :
le module de mesure (116) étant mobile le long du cadre (114) entre la première extrémité et la seconde extrémité,
**caractérisé en ce que**
le module de mesure (116) étant configuré pour tourner autour d'un l'axe de telle sorte que l'orientation du module de mesure (116) par rapport au cadre (114) peut être modifiée ; et
une cavité (117) en retrait dans le plan de masse (113) et située au niveau ou à proximité de la première extrémité du cadre (114), de telle sorte que le module de mesure (116) est au moins partiellement à l'intérieur de la cavité (117) lorsqu'il est au niveau de la première extrémité du cadre (114).

2. Système selon la revendication 1, dans lequel l'axe est sensiblement parallèle au plan de masse (113).

3. Système selon la revendication 1 ou 2, dans lequel :
le module de mesure (116) comprend en outre un boîtier (512) ;
le boîtier (512) comprend une ou plusieurs parois de boîtier qui définissent une ouverture ; et
les une ou plusieurs antennes (510) sont situées dans le boîtier (512) et sont configurées pour transmettre et/ou recevoir des ondes radio (118) passant à travers l'ouverture.

4. Système selon la revendication 3, dans lequel les une ou plusieurs antennes (510) sont accouplées au boîtier (512) par l'intermédiaire d'un dispositif de rotation pouvant fonctionner pour faire tourner les antennes (510) par rapport au boîtier (512) autour d'un autre axe.

5. Système selon la revendication 4, dans lequel l'autre axe est sensiblement parallèle au plan de masse (113), et l'autre axe est sensiblement perpendiculaire à l'axe.

6. Système selon l'une quelconque des revendications 3 à 5, dans lequel les une ou plusieurs parois de boîtier comprennent un ou plusieurs matériaux sélectionnés dans le groupe de matériaux constitué de composite de fibres de carbone, d'aluminium et d'un matériau absorbant radar.

7. Système selon l'une quelconque des revendications 1 à 6, dans lequel une distance entre la première extrémité et la seconde extrémité est d'au moins 10 m.

8. Système selon l'une quelconque des revendications 1 à 7, dans lequel
le système comprend en outre une structure de montage pour supporter l'objet (102) au-dessus du plan de masse (113) pendant une mesure de section transversale radar de l'objet (102) ;
la structure de montage est éloignée du cadre (114) ; et
les une ou plusieurs antennes (510) sont agencées pour transmettre des ondes radio (118) vers la structure de montage.

9. Système selon la revendication 8, dans lequel la structure de montage comprend :
une base (108) conçue pour tourner autour d'un axe de base ;
un support allongé (112) s'étendant vers le haut depuis la base (108) jusqu'à une pointe, la pointe étant conçue pour recevoir l'objet (102) ; et
une enveloppe (110) logeant au moins une partie du support allongé (112) ; dans lequel
l'enveloppe (110) est conçue pour tourner autour d'un axe de support, l'axe de support étant sensiblement parallèle à l'axe de base, la rotation de l'enveloppe (110) autour de l'axe de support étant dans une direction qui est opposée à la rotation de la base (108) autour de l'axe de base.

10. Système selon la revendication 9, dans lequel une vitesse de rotation de la base (108) autour de l'axe de base est sensiblement égale à une vitesse de rotation de l'enveloppe (110) autour de l'axe de support.

11. Système selon l'une quelconque des revendications 8 à 10, dans lequel la structure de montage est située dans une région de champ proche de la ou des antennes (510).

12. Système selon l'une quelconque des revendications 1 à 11, dans lequel :
les une ou plusieurs antennes (510) sont configurées pour recevoir des ondes radio (118) réfléchies par l'objet (102) ;
le système comprend en outre un ou plusieurs processeurs couplés à la ou aux antennes (510) ; et
les un ou plusieurs processeurs sont configurés pour traiter des signaux correspondant aux ondes radio (118) reçues par les une ou plusieurs antennes (510) afin de prédire des caractéristiques déposées à distance de l'objet (102).

13. Procédé de mesure d'une coupe transversale radar d'un objet (102), le procédé comprenant :
la fourniture d'un cadre (114) ayant une première extrémité et une seconde extrémité, le cadre (114) étant fixé à un plan de masse (113) au niveau ou à proximité de la première extrémité, le cadre (114) s'étendant vers le haut à partir du plan de masse (113) vers la seconde extrémité, une cavité (117) étant en retrait dans le plan de masse (113) et située au niveau ou à proximité de la première extrémité du cadre (114), de telle sorte qu'un module de mesure (116) est au moins partiellement à l'intérieur de la cavité (117) lorsqu'il est à la première extrémité du cadre (114) ;
la fourniture d'un module de mesure (116) accouplé au cadre (114) et comprenant une ou plusieurs antennes radar (510), le module de mesure (116) étant mobile le long du cadre (114) entre la première extrémité et la seconde extrémité, et le module de mesure (116) étant configuré pour tourner autour d'un axe de telle sorte que l'orientation du module de mesure (116) par rapport au cadre (114) peut être modifiée ;
la localisation du module de mesure (116) à une première position et une première orientation par rapport au cadre (114) ;
tandis que le module de mesure (116) est situé à la première position et à l'orientation par rapport au cadre (114) :
la transmission, par la ou les antennes (510), d'ondes radio (118) sur l'objet (102) ; et
la réception, par la ou les antennes (510), d'ondes radio (118) réfléchies par l'objet (102) ; et
la détermination, par un ou plusieurs processeurs couplés fonctionnellement à la ou aux antennes (510), de la section transversale radio de l'objet (102) à l'aide d'un ou plusieurs signaux correspondant aux ondes radio (118) reçues par les une ou plusieurs antennes (510).

14. Procédé selon la revendication 13, dans lequel :
le procédé comprend en outre :
la localisation du module de mesure (116) à une seconde position et orientation par rapport au cadre (114) ; et
tandis que le module de mesure (116) est situé au niveau de la seconde position et l'orientation par rapport au cadre (114) :
la transmission, par la ou les antennes (510), d'ondes radio (118) sur l'objet (102) ; et
la réception, par la ou les antennes (510), d'ondes radio (118) réfléchies par l'objet (102) ; et
l'étape de détermination de la section transversale radio de l'objet (102) comprend l'utilisation d'un ou plusieurs signaux correspondant aux ondes radio (118) reçues par les une ou plusieurs antennes (510) tandis que le module de mesure (116) est situé à la seconde position et orientation par rapport au cadre (114).
